# EUROPEAN PATENT SPECIFICATION

(11) **EP 0 264 159 B1**
(45) Date of publication and mention of the grant of the patent: **26.01.1994**
(21) Application number: 87201993.0
(22) Date of filing: 16.10.1987
(51) Int. Cl.: C08G 67/02

(54) **Novel copolymers of CO and olefinically unsaturated hydrocarbons**
Copolymere aus CO und olefinisch umgesättigten Kohlenwasserstoffen
Copolyméres à base de CO et de hydrocarbures non-saturés oléfiniques

(30) Priority: 16.10.1986 NL 8602595
(43) Date of publication of application: 20.04.1988
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 121 965
- EP-A- 0 213 671
- US-A- 3 984 388

## Description

The invention relates to novel copolymers of carbon monoxide with ethene and with one ore more defined α-olefinically unsaturated hydrocarbons.

High molecular weight linear alternating copolymers of carbon monoxide and ethene can be prepared by using catalyst compositions based upon
a) a palladium compound,
b) an anion of an acid with a pKa of less than 6, and
c) a bisphosphine of the general formula R₁R₂P-R-PR₃R₄, wherein R₁-R₄ represent hydrocarbyl groups wich may or may not be substituted with polar groups and R represents a bivalent organic bridging group containing at least two carbon atoms in the bridge.

These copolymers have excellent mechanical properties, notably very great strength, stiffness and impact resistance. Although they can be relatively easily prepared from very cheap starting materials, these copolymers have thus far found no commercial application. This is mainly due to their high melting point of about 257 °C and the processing problems resulting therefrom.

An investigation into these copolymers recently carried out by the Applicant has shown that their melting point can be reduced to a level of between 150 and 245 °C by intruducing into the monomer mixture from which they are prepared, in addition to carbon monoxide and ethene, a relatively small amount of one or more unsaturated hydrocarbons (for the sake of brevity referred to as K), which hydrocarbons contain fewer than 20 carbon atoms and have the general formula CH₂=CHR₅, wherein R₅ represents a hydrocarbyl group. The use of the aforementioned catalyst compositions for such a monomer mixture leads to the formation of linear polymers with reduced melting points which are composed of units of the formula -CO-(C₂H₄)- and units of the formula -CO-(K')-, wherin K' represents a monomer unit originating in a monomer K used.

The degree to which the melting point is reduced is dependent among other things on the value of the quotient m/n, in which m represents the average number of units of the general formula -CO-(K')- and n the average number of units of the formula -CO-(C₂H₄)-present in the copolymer. In the case of copolymers of carbon monoxide with ethene and a given monomer K, this dependency means that a change in n must be offset by a proportional change in m to achieve similar melting point reductions, and that at a constant n the melting point reduction observed will be larger or smaller with a larger or smaller m, respectively.

Attempts at arriving at the desired melting point reduction by introducing into the monomer mixture from which the polymers are prepared, in addition to carbon monoxide and ethene, one or more unsaturated hydrocarbons (for the sake of brevity referred to as A) which, like the monomers K, contain fewer than 20 carbon atoms, but which have the general formula CH₂=(CR₆)(CHR₇R₈), wherein R₆ represents a hydrocarbyl group and R₇ and R₈ represent hydrogen and/or hydrocarbyl groups, have until recently remained unsuccessful. The use of the above-mentioned catalyst compositions with such a monomer mixture leads to the formation of polymers in which the quotient m₁/n is lower than 0.0005. In the said quotient m₁ represents the average number of units of the general formula -CO-(A')- and n has the meaning given hereinbefore. A' represents a monomer unit originating in a monomer A used. The extremely small amount of monomer A that is incorporated in the polymer is insufficient to bring about the desired reduction of the melting point.

Continued research into this subject has now surprisingly shown that the monomers A described hereinbefore can also be used to reduce the melting points of linear alternating carbon monoxide/ethene copolymers from 257 °C to a value of between 150 and 245 °C, provided that in the above-described catalyst compositions containing an anion of an acid with a pKa of less than 4 as the component b), the bisphosphine used as component c) is replaced by a nitrogen-containing compound of the general formula 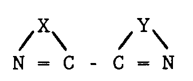
wherein X and Y represent similar or dissimilar organic bridging groups, each containing three or four atoms in the bridge at least two of which are carbon atoms. The use of the afore-mentioned catalyst compositions containing such a nitrogen-containing compound as component c) for a monomer mixture containing, in addition to carbon monoxide and ethene, one or more of the monomers A, leads to the formation of linear copolymers with reduced melting points which are composed of units of the formula -CO-(C₂H₄)- and units of the general formula -CO-(A').

When monomers of type A are used - as also the case when monomers of type K are used - the degree of melting point reduction depends among other things on the said quotient, and thus, when a given monomer A is used, the reduction of the melting point within the range 150-245 °C will be bigger according as the quotient has a higher value. Furthermore, the degree of melting point reduction is dependent on the molecular weights and the structures of the type A monomers used in the polymer preparation.

Briefly stated, the polymers to which the invention relates may be defined as follows:
a) they are obtainable by the polymerization of carbon monoxide with ethene and with one or more unsaturated hydrocarbons (A) which contain fewer than 20 carbon atoms and have the general formula CH₂=C(R₆)(CHR₇R₈) in which R₆ represents a hydrocarbyl group and R₇ and R₈ represent hydrogen and/or hydrocarbyl groups, in the presence of a catalyst composition based upon
   a) a palladium compound,
   b) an anion of an acid with a pKa of less than 4,
   c) a compound of the general formula 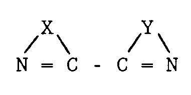 wherein X and Y represent similar or dissimilar organic bridging groups, each containing three or four atoms in the bridge at least two of which are carbon atoms, and
   d) optionally an organic oxidant,
b) they have a linear structure,
c) they are made up of the units of the formula -CO-(C₂H₄)- and units of the general formula -CO-(A')-, wherein A' represents a monomer unit originating in a monomer A used,
d) they have melting points in the range of from 150 and 245 °C, and
e) the quotient m₁/n is greater than 0.0005, but not greater than 0.030, in which quotient m₁ represents the average number of units of the general formula -CO-(A')- and n represents the average number of units of the formula -CO-(C₂H₄)- present in the copolymer.
   Copolymers that meet the criteria a)-e) are novel.

The present patent application therefore relates to novel copolymers of carbon monoxide with ethene and with one or more α-olefinically unsaturated hydrocarbons, which copolymers meet the criteria mentioned hereinbefore under a)-e). The patent application further relates to the preparation of these copolymers as well as to shaped objects consisting at least partly of these copolymers.

The copolymers of the invention have melting points which lie between 150 and 245 °C. Preference is given to copolymers having melting points between 170 and 240 °C and in particular to copolymers having melting points between 195 and 235 °C, the quotient m₁/n, as defined hereinbefore, being in the range of from 0.022 to 0.030.

In the copolymers of the invention the units of the general formula -CO-(A')- may be similar or dissimilar. The latter is the case, for instance when in the preparation of the copolymers the starting mixture is a monomer mixture which, in addition to carbon monoxide and ethene, contains two or more monomers of type A having different numbers of carbon atoms. However, even when the mixture to be polymerised contains only one monomer A, the prepared copolymer may include different units of the general formula -CO-(A')-. If this is the case, the different units will have corresponding numbers of carbon and hydrogen atoms, but their structures will be different, owing, for instance, to isomerization.

Preference is given to copolymers in which all the units of the general formula -CO-(A')- have the same number of carbon atoms. Such copolymers can be prepared starting from a monomer mixture which contains only one monomer A in addition to carbon monoxide and ethene. The monomers A which are eligible for use in the preparation of the copolymers of the invention and which can be represented by the general formula CH₂=C(R₆)(CHR₇R₈) should contain fewer than 20 carbon atoms. Monomers A containing fewer than 10 carbon atoms are preferred. The hydrocarbyl group R₆ is preferably an alkyl group and if R₇ and R₈ represent hydrocarbyl groups, these are preferably also alkyl groups.
Preference is further given to monomers A in the general formula of which R₆ represents an alkyl group with one or two carbon atoms, R₇ is a hydrogen atom and R₈ is a hydrogen atom or an alkyl group with one to four carbon atoms. Examples of such monomers A are
2-methyl propene-1, 2-methyl butene-1,
2-methyl pentene-1, 2-ethyl butene-1,
2-ethyl pentene-1 and 2,4,4-trimethyl pentene-1.
Special preference is given to the use of 2-methyl propene-1 as monomer A.

As indicated hereinbefore, the copolymers of the invention can be prepared by using a catalyst composition based upon
a) a palladium compound,
b) an anion of an acid with a pKa of less than 4, and
c) a compound of the general formula 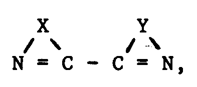 wherein X and Y have the meanings given hereinbefore.

The palladium compound present in the catalyst compositions as component a) is preferably a palladium salt of a carboxylic acid and in particular palladium acetate.

As examples of acids with a pKa of less than 4 (determined in aqueous solution at 18 °C) whose anions should be present in the catalyst compositions as component b), may be mentioned, among others, mineral acids, such as perchloric acid, sulphuric acid, phosphoric acid and nitrous acid, sulphonic acids, such as 2-hydroxypropane-2-sulphonic acid, para-toluenesulphonic acid, methanesulphonic acid and trifluoromethanesulphonic acid, and carboxylic acids, such as trifluoroacetic acid, trichloroacetic acid, dichloroacetic acid, difluoroacetic acid, tartaric acid and 2,5-dihydroxy benzoic acid. Preferably, the catalyst composition contains an anion of an acid with a pKa of less than 2 and in particular an anion of a sulphonic acid, such as para-toluenesulphonic acid, or an anion of a carboxylic acid, such as trifluoroacetic acid, as the component b). In the catalyst compositions component b) is preferably present in a quantity of from 0,5 to 200 and in particular of from 1,0 to 100 equivalents per gram atom of palladium. Component b) may be introduced into the catalyst compositions either in the form of an acid or in the form of a salt. Eligible salts include non-noble transition metal salts. When component b) is used as a salt of a non-noble transition metal, preference is given to a copper salt. Optionally, components a) and b) may be combined in a single compound. An example of such a compound is palladium para-tosylate.

Preferably, component c) is present in the catalyst compositions in a quantity of 0.5-200 and in particular 1-50 mol per mol of palladium compound. In component c) the bridging groups X and Y are linked by the two carbon atoms shown in the general formula. In addition to this bond the bridging groups X and Y can be linked by a further bond, such as is the case with 1,10-phenanthroline and compounds derived therefrom. If, in addition to carbon atoms, the bridging groups X and Y contain further atoms in the bridge, these atoms are preferably nitrogen atoms. Further, preference is given to components c) wherein the bridging groups X and Y are similar. Examples of suitable components c) are 2,2'-bipyridine and compounds derived therefrom, such as 4,4'-dimethyl-2,2'-bipyridine,
4,4'-dichloro-2,2'-bipyridine,
4,4'-dimethoxy-2,2'-bipyridine and
4,4'-dicarboxy-2,2'-bipyridine.
Further examples of suitable components c) that may be mentioned are 1,10-phenanthroline and compounds derived therefrom, such as
5-chloro-1, 10-phenanthroline,
4,7-diphenyl-1,10-phenanthroline,
4,7-dimethyl-1,10-phenanthroline,
2,9-dichloro-1,10-phenanthroline,
1,10-phenanthroline-5-sulphonic acid and
4,7-diphenyl-1.10-phenanthrolinedisulphonic acids.
Examples of other suitable components c) are
2,2'-biquinoline,
2-(2-pyridyl)benzimidazole and
3-(2-pyridyl)-5,6-diphenyl-1,2,4-triazine.

A 2,2'-bipyridine which may or may not be substituted or a 1,10-phenanthroline which may or may not be substituted are preferred components c). Special preference is given to the compounds 2,2'-bipyridine and 1,10-phenanthroline.

Preferably, an organic oxidant is introduced into the catalyst compositions as a component d).

As examples of suitable organic oxidants eligible for use as the components d) in the catalyst compositions bay be mentioned 1,2- and 1,4-quinones, aliphatic nitrites such as methyl nitrite, ethyl nitrite, propyl nitrite and butyl nitrite, aromatic nitro-compounds such as nitrobenzene nitrotoluene and nitrochlorobenzene and peroxides, such as di-tert-butyl peroxide and dicumyl peroxide. Preference is given to quinones and especially 1,4-quinones. In addition to substituted or unsubstituted benzoquinones other quinones such as naphthaquinones and anthraquinones, which may or may not be substituted, are eligible for use. Benzoquinones are preferred, in particular 1,4-benzoquinones. Examples of suitable compounds of this type are:
2,6-dichloro-1,4-benzoquinone,
tetrachloro-1,4-benzoquinone,
2,3-dimethyl-1,4-benzoquinone,
2,6-dimethyl-1,4-benzoquinone,
monomethyl-1,4-benzoquinone,
trichloro-1,4-benzoquinone,
2,5-dihydroxy-1,4-benzoquinone,
2,5-dihydroxy-3,6-dinitro-1,4-benzoquinone and mononitro-1,4-benzoquinone.

The preferred component d) is 1,4-benzoquinone.

The quantity of organic oxidant used preferably amounts to 1-10 000 and in particular 10-5000 mol per gram atom of palladium.

The preparation of the polymers according to the invention is preferably carried out in a liquid diluent. Very suitable liquid diluents are lower alcohols such as methanol and ethanol.

The quantity of catalyst composition applied in the preparation of the polymers may vary within wide ranges. Per mol of olefinically unsaturated compound to be polymerized, a quantity of catalyst is used which preferably contains 10⁻⁷-10⁻³ and in particular 10⁻⁶-10⁻⁴ gram atom of palladium.

Preferably, the preparation of the copolymers is carried out at a temperature of 20-200 °C and a pressure of 1-200 bar and in particular at a temperature of 30-150 °C and a pressure of 20-100 bar. In the mixture to be polymerized the molar ratio of the olefinically unsaturated organic compounds relative to carbon monoxide preferably is 10:1-1:5 and in particular 5:1-1:2. The carbon monoxide used in the preparation of the polymers according to the invention need not be pure. It may contain such contaminants as hydrogen, carbon dioxide and nitrogen.

The invention will now be illustrated with the aid of the following examples.

### Example 1

A carbon monoxide/ethene copolymer was prepared as follows. A stirred autoclave of 300 ml capacity was charged with a catalyst solution comprising
50 ml of methanol,
0.1 mmol of palladium acetate,
0.5 mmol of copper para-tosylate,
0.15 mmol of 1,3-bis(diphenylphosphino)propane, and
2 mmol of 1,4-benzoquinone.

After any air present in the autoclave had been removed by evacuation, ethene was introduced until a pressure of 20 bar was reached, followed by carbon monoxide until a pressure of 50 bar was reached. Then the contents of the autoclave were brought to 55 °C. After 1 hour the copolymerisation was terminated by cooling to room temperature and releasing the pressure. The copolymer formed was filtered off, washed with methanol and dried in vacuo at room temperature.
20 g of copolymer having a melting point of 257 °C was obtained.

### Example 2

A carbon monoxide/ethene/2-methyl propene-1 terpolymer was prepared substantially in the same way as the copolymer of Example 1, the differences being
a) after the autoclave had been evacuated, 50 ml of 2-methyl propene-1 was introduced in addition,
b) the reaction temperature was 70 °C instead of 55 °C, and
c) the reaction time was 5 hours instead of 1 hour. 10 g of terpolymer having a melting point of 250 °C was obtained.

### Example 3

A carbon monoxide/ethene/2-methyl propene-1 terpolymer was prepared substantially in the same way as the copolymer of Example 1, except for the following differences
a) a catalyst solution was used which comprised
   30 ml of methanol,
   0.1 mmol of palladium acetate,
   2 mmol of para-toluenesulphonic acid,
   3 mmol of 2,2'-bipyridine, and
   10 mmol of 1,4-benzoquinone,
b) after the evacuation, 50 ml of 2-methyl propene-1 was in addition introduced into the autoclave
c) ethene was introduced into the autoclave until a pressure of 15 bar was reached, followed by carbon monoxide until a pressure of 45 bar was reached,
d) the reaction temperature was 90 °C instead of 55 °C, and
e) the reaction time was 5 hours instead of 1 hour. 14.2 g of terpolymer having a melting point of 225 °C was obtained.

### Example 4

A carbon monoxide/ethene/2-methyl propene-1 terpolymer was prepared substantially in the same way as the terpolymer of Example 3, except that now a reaction temperature of 75 °C instead of 90 °C was used.
13.1 g of terpolymer having a melting point of 230 °C was obtained

Of Examples 1-4, Examples 3 and 4 are examples according to the invention; These examples afforded carbon monoxide/ethene/2-methyl propene-1 terpolymers having melting points between 150 and 245 °C. Examples 1 and 2 fall outside the scope of the invention. They have been included in the patent application for comparison. Example 1 led to the formation of a carbon monoxide/ethene copolymer. Example 2 did lead to the formation of a carbon monoxide/ethene/2-methyl propene-1 terpolymer, but this terpolymer had a melting point higher than 245 °C
With the aid of ¹³C-NMR analysis it was established that the terpolymers prepared according to Examples 3 and 4 had a linear structure and were composed of units of the formula -CO-(C₂H₄)- and units of the formula -CO-(C₄H₈)-, which units occurred randomly distributed within the terpolymers. The quotient value m₁/n of each of the terpolymers prepared according to Examples 2-4 was computed from the ¹³C-NMR data. For the polymers prepared according to Examples 2, 3 and 4 these values were < 0.0005, 0.03 and 0.022, respectively. Thus it is shown that the terpolymers have lower melting points according as their quotients m₁/n are higher

## Claims (Claims for the following Contracting State(s): AT, BE, CH, DE, FR, GB, GR, IT, LI, NL, SE)

1. Copolymers of carbon monoxide with ethene and with one or more other α-olefinically unsaturated hydrocarbons, characterized in that
a) they are obtainable by the copolymerization of carbon monoxide with ethene and with one or more unsaturated hydrocarbons (A) which contain fewer than 20 carbon atoms and have the general formula CH₂=C(R₆)(CHR₇R₈), wherein R₆ represents a hydrocarbyl group and R₇ and R₈ represent hydrogen and/or hydrocarbyl groups, in the presence of a catalyst composition based upon
a) a palladium compound,
b) an anion of an acid with a pKa of less than 4,
c) a compound of the general formula 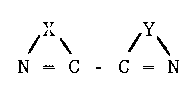 wherein X and Y represent similar or dissimilar organic bridging groups, each containing three or four atoms in the bridge at least two of which are carbon atoms, and
d) optionally an organic oxidant,
b) they have a linear structure,
c) they are made up of units of the formula -CO-(C₂H₄)- and units of the general formula -CO-(A')-, wherein A' represents a monomer unit
originating in a monomer A used,
d) they have melting points of between 150 and 245 °C, and
e) the quotient m₁/n is greater than 0.0005, but not greater than 0.030, in which quotient m₁ represents the average number of units of the general formula -CO-(A')- and n represents the average number of units of the formula -CO-(C₂H₄)- present in the copolymer.

2. Copolymers as claimed in claim 1, characterized in that they have melting points of between 195 and 235 °C and in that the quotient m₁/n is in the range of from 0.022 to 0.030.

3. Copolymers as claimed in claims 1 or 2, characterized in that in the general formula of the monomers A, R₆ is an alkyl group with one or two carbon atoms, R₇ is a hydrogen atom and R₈ is a hydrogen atom or an alkyl group with one to four carbon atoms.

4. Copolymers as claimed in claim 3 characterized in that the monomer A used is 2-methyl propene-1.

5. Process for the preparation of polymers as claimed in claims 1 to 4, characterized in that a mixture of carbon monoxide with ethene and with one or more monomers A is polymerized by using a catalyst composition based upon
a) a palladium compound,
b) an anion of an acid with a pKa of less than 4,
c) a compound of the general formula 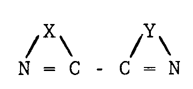 wherein X and Y represent similar or dissimilar organic bridging groups, each containing three or four atoms in the bridge at least two of which are carbon atoms, and
d) optionally an organic oxidant.

6. Process as claimed in claim 5, characterized in that a catalyst composition is used which is based upon an anion of a sulphonic acid, such as para-toluenesulphonic acid, or upon an anion of a carboxylic acid, such as trifluoroacetic acid, as the component b).

7. Process as claimed in one or more of claims 5 or 6, characterized in that a catalyst composition is used in which component b) is present in a quantity of from 1.0 to 100 equivalents per gram atom of palladium.

8. Process as claimed in one or more of claims 5 to 7, characterized in that a catalyst composition is used which includes a 2,2'-bipyridine which may or may not be substituted or a 1,10-phenanthroline which may or may not be substituted, as the component c).

9. Process as claimed in one or more of claims 5 to 8, characterized in that a catalyst composition is used which includes a 1,4-quinone, such as 1,4-benzoquinone, as the component d).

10. Process as claimed in one or more of claims 5 to 9, characterized in that the molar ratio of the olefinically unsaturated compounds relative to carbon monoxide is 5:1-1:2.

## Claims (Claims for the following Contracting State(s): ES)

1. Process for the preparation of copolymers of carbon monoxide with ethene and with one or more other α-olefinically unsaturated hydrocarbons, characterized by copolymerizing carbon monoxide with ethene and with one or more unsaturated hydrocarbons (A) which contain fewer than 20 carbon atoms and have the general formula CH₂=C(R₆)(CHR₇R₈), wherein R₆ represents a hydrocarbyl group and R₇ and R₈ represent hydrogen and/or hydrocarbyl groups, in the presence of a catalyst composition based upon
a) a palladium compound,
b) an anion of an acid with a pKa of less than 4,
c) a compound of the general formula 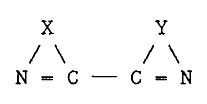 wherein X and Y represent similar or dissimilar organic bridging groups, each containing three or four atoms in the bridge at least two of which are carbon atoms, and
d) optionally an organic oxidant,
a) which copolymerization yields copolymers which have a linear structure,
b) are made up of units of the formula -CO-(C₂H₄)- and units of the general formula -CO-(A')-, wherein A' represents a monomer unit originating in a monomer A used,
c) have melting points of between 150 and 245 °C, and in which copolymers
d) the quotient m₁/n is greater than 0.0005, but not greater than 0.030, in which quotient m₁ represents the average number of units of the general formula -CO-(A')- and n represents the average number of units of the formula -CO-(C₂H₄)- present in the copolymer.

2. Process as claimed in claim 1, characterized in that the copolymers have melting points of between 195 and 235 °C and in that the quotient m₁/n is in the range of from 0.022 to 0.030.

3. Process as claimed in claims 1 or 2, characterized in that in the general formula of the monomers A, R₆ is an alkyl group with one or two carbon atoms, R₇ is a hydrogen atom and R₈ is a hydrogen atom or an alkyl group with one to four carbon atoms.

4. Process as claimed in claim 3 characterized in that the monomer A used is 2-methyl propene-1.

5. Process as claimed in one or more of claims 1-4, characterized in that a catalyst composition is used which is based upon an anion of a sulphonic acid, such as para-toluenesulphonic acid, or upon an anion of a carboxylic acid, such as trifluoroacetic acid, as the component b).

6. Process as claimed in one or more of claims 1-5, characterized in that a catalyst composition is used in which component b) is present in a quantity of from 1.0 to 100 equivalents per gram atom of palladium.

7. Process as claimed in one or more of claims 1-6, characterized in that a catalyst composition is used which includes a 2,2'-bipyridine which may or may not be substituted or a 1,10-phenanthroline which may or may not be substituted, as the component c).

8. Process as claimed in one or more of claims 1-7, characterized in that a catalyst composition is used which includes a 1,4-quinone, such as 1,4-benzoquinone, as the component d).

9. Process as claimed in one or more of claims 1-8, characterized in that the molar ratio of the olefinically unsaturated compounds relative to carbon monoxide is 5:1-1:2.

## Patentansprüche (Patentansprüche für folgende(n) Vertragsstaat(en): AT, BE, CH, DE, FR, GB, GR, IT, LI, NL, SE)

1. Copolymere aus Kohlenmonoxid mit Ethen und mit einem oder mit mehreren anderen α-olefinisch ungesättigten Kohlenwasserstoffen, dadurch gekennzeichnet, daß
a) sie durch die Copolymerisation von Kohlenmonoxid mit Ethen und mit einem oder mit mehreren ungesättigten Kohlenwasserstoffen (A), die Weniger als 20 Kohlenstoffatome enthalten und die allgemeine Formel CH₂=C(R₆)(CHR₇R₈) aufweisen, worin R₆ eine Hydrocarbylgruppe bedeutet und R₇ und R₈ Wasserstoff und/oder Hydrocarbylgruppen darstellen, in Gegenwart einer Katalysatorzusammensetzung auf der Basis von
a) einer Palladiumverbindung,
b) einem Anion einer Säure mit einem pKa-Wert von kleiner als 4,
c) einer Verbindung der allgemeinen Formel 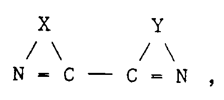 worin X und Y gleiche oder verschiedene organische Brückengruppen darstellen, die jeweils drei oder vier Atome in der Brücke enthalten, von denen wenigstens zwei Kohlenstoffatome sind, und
d) gegebenenfalls eines organischen Oxidationsmittels erhältlich sind,
b) eine lineare Struktur aufweisen,
c) sie aus Einheiten der Formel -CO-(C₂H₄)- und aus Einheiten der allgemeinen Formel -CO-(A')- bestehen, worin A' eine Monomereinheit darstellt, die ihren Ursprung in einem verwendeten Monomer A hat,
d) Schmelzpunkte zwischen 150 und 245°C aufweisen und
e) der Quotient m₁/n größer als 0,0005 ist, aber nicht größer als 0,030 ist, in welchem Quotienten m₁ die mittlere Anzahl der im Copolymer vorliegenden Einheiten der allgemeinen Formel -CO-(A')- darstellt und n die mittlere Anzahl der im Copolymer vorliegenden Einheiten der Formel -CO-(C₂H₄)-bedeutet.

2. Copolymere nach Anspruch 1, dadurch gekennzeichnet, daß sie Schmelzpunkte zwischen 195 und 235°C aufweisen und daß der Quotient m₁/n im Bereich von 0,022 bis 0,030 liegt.

3. Copolymere nach Anspruch 1 oder 2, dadurch gekennzeichnet, daß in der allgemeinen Formel der Monomere A der Rest R₆ eine Alkylgruppe mit 1 oder 2 Kohlenstoffatomen darstellt, R₇ ein Wasserstoffatom ist und R₈ ein Wasserstoffatom oder eine Alkylgruppe mit 1 bis 4 Kohlenstoffatomen bedeutet.

4. Copolymere nach Anspruch 3, dadurch gekennzeichnet, daß das eingesetzte Monomer A 2-Methylpropen-1 ist.

5. Verfahren zur Herstellung von Polymeren nach den Ansprüchen 1 bis 4, dadurch gekennzeichnet, daß ein Gemisch aus Kohlenmonoxid mit Ethen und mit einem oder mit mehreren Monomeren A unter Anwendung einer Katalysatorzusammensetzung auf der Basis von
a) einer Palladiumverbindung,
b) einem Anion einer Säure mit einem pKa-Wert von kleiner als 4,
c) einer Verbindung der allgemeinen Formel 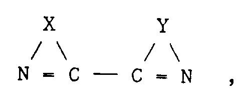 worin X und Y gleiche oder verschiedene organische Brückengruppen darstellen, die jeweils drei oder vier Atome in der Brücke enthalten, von denen wenigstens zwei Kohlenstoffatome sind, und
d) gegebenenfalls einem organischen Oxidationsmittel polymerisiert wird.

6. Verfahren nach Anspruch 5, dadurch gekennzeichnet, daß eine Katalysatorzusammensetzung verwendet wird, die auf einem Anion einer Sulfonsäure wie p-Toluolsulfonsäure oder auf einem Anion einer Carbonsäure wie Trifluoressigsäure als Komponente b) beruht.

7. Verfahren nach einem oder mehreren der Ansprüche 5 oder 6, dadurch gekennzeichnet, daß eine Katalysatorzusammensetzung verwendet wird, worin die Komponente b) in einer Menge von 1,0 bis 100 Äquivalenten je Grammatom Palladium vorliegt.

8. Verfahren nach einem oder mehreren der Ansprüche 5 bis 7, dadurch gekennzeichnet, daß eine Katalysatorzusammensetzung verwendet wird, die als Komponente c) ein 2,2'-Bipyridin, das substituiert oder unsubstituiert sein kann, oder ein 1,10-Phenanthrolin, das substituiert oder unsubstituiert sein kann, enthält.

9. Verfahren nach einem oder mehreren der Ansprüche 5 bis 8, dadurch gekennzeichnet, daß eine Katalysatorzusammensetzung verwendet wird, die als Komponente d) ein 1,4-Chinon, wie 1,4-Benzochinon, einschließt.

10. Verfahren nach einem oder mehreren der Ansprüche 5 bis 9, dadurch gekennzeichnet, daß das Molverhältnis der olefinisch ungesättigten Verbindungen zu Kohlenmonoxid von 5:1 bis 1:2 beträgt.

## Patentansprüche (Patentansprüche für folgende(n) Vertragsstaat(en): ES)

1. Verfahren zur Herstellung von Copolymeren aus Kohlenmonoxid mit Ethen und mit einem oder mit mehreren anderen α-olefinisch ungesättigten Kohlenwasserstoffen, gekennzeichnet durch Copolymerisieren von Kohlenmonoxid mit Ethen und mit einem oder mit mehreren ungesättigten Kohlenwasserstoffen (A), die weniger als 20 Kohlenstoffatome enthalten und die allgemeine Formel CH₂=C(R₆)(CHR₇R₈) aufweisen, worin R₆ eine Hydrocarbylgruppe bedeutet und R₇ und R₈ Wasserstoff und/oder Hydrocarbylgruppen darstellen, in Gegenwart einer Katalysatorzusammensetzung auf der Basis von
a) einer Palladiumverbindung,
b) einem Anion einer Säure mit einem pka-Wert von kleiner als 4,
c) einer Verbindung der allgemeinen Formel 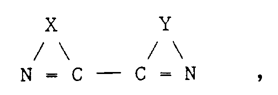 worin X und Y gleiche oder verschiedene organische Brückengruppen darstellen, die jeweils drei oder vier Atome in der Brücke enthalten, von denen wenigstens zwei Kohlenstoffatome sind, und
d) gegebenenfalls eines organischen Oxidationsmittels, welche Copolymerisation zu Copolymeren führt, die
a) eine lineare Struktur aufweisen,
b) aus Einheiten der Formel -CO-(C₂H₄)- und aus Einheiten der allgemeinen Formel -CO-(A')- bestehen, worin A' eine Monomereinheit darstellt, die ihren Ursprung in einem verwendeten Monomer A hat,
c) Schmelzpunkte zwischen 150 und 245°C aufweisen und
d) der Quotient m₁/n größer als 0,0005 ist, aber nicht größer als 0,030 ist, in welchem Quotienten m₁ die mittlere Anzahl der im Copolymer vorliegenden Einheiten der allgemeinen Formel -CO-(A')- darstellt und n die mittlere Anzahl der im Copolymer vorliegenden Einheiten der Formel -CO-(C₂H₄)-bedeutet.

2. Verfahren nach Anspruch 1, dadurch gekennzeichnet, daß die Copolymere Schmelzpunkte zwischen 195 und 235°C aufweisen und daß der Quotient m₁/n im Bereich von 0,022 bis 0,030 liegt.

3. Verfahren nach den Ansprüchen 1 oder 2, dadurch gekennzeichnet, daß in der allgemeinen Formel der Monomere A der Rest R₆ eine Alkylgruppe mit 1 oder 2 Kohlenstoffatomen darstellt, R₇ ein Wasserstoffatom ist und R₈ ein Wasserstoffatom oder eine Alkylgruppe mit 1 bis 4 Kohlenstoffatomen bedeutet.

4. Verfahren nach Anspruch 3, dadurch gekennzeichnet, daß das eingesetzte Monomer A 2-Methylpropen-1 ist.

5. Verfahren nach einem oder mehreren der Ansprüche 1 bis 4, dadurch gekennzeichnet, daß eine Katalysatorzusammensetzung verwendet wird, die auf einem Anion einer Sulfonsäure wie p-Toluolsulfonsäure oder auf einem Anion einer Carbonsäure wie Trifluoressigsäure als Komponente b) beruht.

6. Verfahren nach einem oder mehreren der Ansprüche 1 bis 5, dadurch gekennzeichnet, daß eine Katalysatorzusammensetzung verwendet wird, worin die Komponente b) in einer Menge von 1,0 bis 100 Äquivalenten je Grammatom Palladium vorliegt.

7. Verfahren nach einem oder mehreren der Ansprüche 1 bis 6, dadurch gekennzeichnet, daß eine Katalysatorzusammensetzung verwendet wird, die als Komponente c) ein 2,2'-Bipyridin, das substituiert oder unsubstituiert sein kann, oder ein 1,10-Phenanthrolin, das substituiert oder unsubstituiert sein kann, enthält.

8. Verfahren nach einem oder mehreren der Ansprüche 1 bis 7, dadurch gekennzeichnet, daß eine Katalysatorzusammensetzung verwendet wird, die als Komponente d) ein 1,4-Chinon, wie 1,4-Benzochinon, einschließt.

9. Verfahren nach einem oder mehreren der Ansprüche 1 bis 8, dadurch gekennzeichnet, daß das Molverhältnis der olefinisch ungesättigten Verbindungen zu Kohlenmonoxid von 5:1 bis 1:2 beträgt.

## Revendications (Revendications pour l'(les) Etat(s) contractant(s) suivant(s): AT, BE, CH, DE, FR, GB, GR, IT, LI, NL, SE)

1. Copolymères de monoxyde de carbone et d'éthylène, ainsi que d'un ou de plus d'un hydrocarbure à insaturation α-oléfinique, caractérisé en ce que
a) ils peuvent être obtenus par copolymérisation de monoxyde de carbone et d'éthylène ainsi que d'un ou de plus d'un hydrocarbure non saturé (A) qui renferme une quantité d'atomes de carbone inférieure à 20 et présente la formule générale CH₂=C(R₆)(CHR₇R₈) dans laquelle R₆ représente un groupe hydrocarbyle et R₇ et R₈ représentent de l'hydrogène et/ou des groupes hydrocarbyles, en présence d'une composition de catalyseur à base de :
a) un composé du palladium,
b) un anion d'un acide présentant un pka inférieur à 4,
c) un composé de formule générale 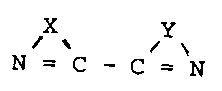 dans laquelle X et Y représentent des groupes organiques de pontage, identiques ou différents, renfermant chacun trois ou quatre atomes dans le pont dont au moins deux sont des atomes de carbone, et
d) facultativement un agent oxydant organique,
b) ils présentent une structure linéaire,
c) ils sont constitués de motifs de formule -CO-(C₂H₄)- et de motifs de formule générale -CO-(A')-, dans laquelle A' représente un motif monomère se trouvant à l'origine dans un monomère A utilisé,
d) ils présentent des points de fusion dans la gamme de 150 à 245°C, et
e) le quotient m₁/n est supérieur à 0,0005, mais ne dépasse pas 0,030, quotient dans lequel m₁ représente le nombre moyen de motifs de formule générale -CO-(A')-et n représente le nombre moyen de motifs de la formule -CO-(C₂H₄)- présents dans le copolymère.

2. Copolymères tels que revendiqués dans la revendication 1, caractérisés en ce qu'ils ont des points de fusion se situant entre 195 et 235°C et que le quotient m₁/n se situe dans la gamme de 0,022 à 0,030.

3. Copolymères tels que revendiqués dans les revendications 1 ou 2, caractérisés en ce que, dans la formule générale des monomères A, R₆ est un groupe alkyle présentant un ou deux atomes de carbone, R₇ est un atome d'hydrogène et R₈ est un atome d'hydrogène ou un groupe alkyle présentant de un à quatre atomes de carbone.

4. Copolymères tels que revendiqués dans la revendication 3, caractérisés en ce que le monomère A utilisé est le 2-méthyl propène-1.

5. Procédé pour la préparation des polymères tel que revendiqué dans les revendications 1 à 4, caractérisé en ce qu'un mélange de monoxyde de carbone et d'éthylène ainsi que d'un ou de plus d'un monomère A est polymérisé en utilisant une composition catalytique tel que :
a) un composé du palladium,
b) un anion d'un acide présentant un pKa inférieur à 4,
c) un composé de formule générale 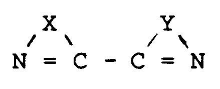 dans laquelle X et Y représentent des groupes organiques de pontage, identiques ou différents, renfermant chacun trois ou quatre atomes dans le pont dont au moins deux sont des atomes de carbone, et
d) facultativement un agent oxydant organique.

6. Procédé tel que revendiqué dans la revendication 5, caractérisé en ce que l'on utilise une composition de catalyseur à base d'un anion d'un acide sulfonique, tel que l'acide para-toluènesulfonique, ou à base d'un anion d'un acide carboxylique, tel que l'acide trifluoroacétique, en tant que composant b).

7. Procédé tel que revendiqué dans une ou plus d'une des revendications 5 ou 6, caactérisé en ce que l'on utilise une composition de catalyseur dans laquelle le composant b) est présent en une quantité de 1,0 à 100 équivalents par atome-gramme de palladium.

8. Procédé tel que revendiqué dans une ou plus d'une des revendications 5 à 7, caractérisé en ce que l'on utilise une composition de catalyseur qui comporte une 2,2'-bipyridine qui peut être substituée ou non ou bien une 1,10-phénanthroline qui peut être substituée ou non, en tant que composant c).

9. Procédé tel que revendiqué dans une ou plus d'une des revendications 5 à 8, caractérisé en ce que l'on utilise une composition de catalyseur qui renferme une 1,4-quinone, telle que la 1,4-benzoquinone, en tant que composant d).

10. Procédé tel que revendiqué dans une ou plus d'une des revendications 5 à 9, caractérisé en ce que le rapport molaire des composés à insaturation oléfinique par rapport au monoxyde de carbone est de 5:1 à 1:2.

## Revendications (Revendications pour l'(les) Etat(s) contractant(s) suivant(s): ES)

1. Procédé pour la préparation de copolymères de monoxyde de carbone et d'éthylène, ainsi que d'un ou de plus d'un hydrocarbure à insaturation α-oléfinique, caractérisé en ce que l'on copolymérise du monoxyde de carbone et de l'éthylène ainsi que d'un ou de plus d'un hydrocarbure non saturé (A) qui renferme une quantité d'atomes de carbone inférieure à 20 et présentent la formule générale CH₂=C(R₆)(CHR₇R₈), dans laquelle R₆ représente un groupe hydrocarbyle et R₇ et R₈ représentent de l'hydrogène et/ou des groupes hydrocarbyle, en présence d'une composition de catalyseur à base de :
a) un composé du palladium,
b) un anion d'un acide présentant un pKa inférieur à 4,
c) un composé de formule générale 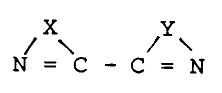 dans laquelle X et Y représentent des groupes organiques de pontage, identiques ou différents, renfermant chacun trois ou quatre atomes dans le pont dont au moins deux sont des atomes de carbone, et
d) facultativement un agent oxydant organique,
a) cette polymérisation fournissant des copolymères qui possèdent une structure linéaire,
b) sont constitués de motifs de formule -CO-(C₂H₄)- et de motifs de formule générale -CO-(A')-, dans laquelle A' représente un motif monomère se trouvant à l'origine dans un monomère A utilisé,
c) présentent des points de fusion dans la gamme de 150 à 245°C, et
d) le quotient m₁/n est supérieur à 0,0005, mais ne dépasse pas 0,030, quotient dans lequel m₁ représente le nombre moyen de motifs de formule générale -CO-(A')- et n représente le nombre moyen de motifs de la formule -CO-(C₂H₄)- présents dans le copolymère.

2. Procédé tel que revendiqué dans la revendication 1, caractérisé en ce qu'ils ont des points de fusion se situant entre 195 et 235°C et que le quotient m₁/n se situe dans la gamme de 0,022 à 0,030.

3. Procédé tel que revendiqué dans les revendications 1 ou 2, caractérisé en ce que, dans la formule générale des monomères A, R₆ est un groupe alkyle présentant un ou deux atomes de carbone, R₇ est un atome d'hydrogène et R₈ est un atome d'hydrogène ou un groupe alkyle présentant de un à quatre atomes de carbone.

4. Procédé tel que revendiqué dans la revendication 3, caractérisé en ce que le monomère A utilisé est le 2-méthyl propène-1.

5. Procédé tel que revendiqué dans une ou plus d'une des revendications 1 à 4, caractérisé en ce que l'on utilise une composition de catalyseur à base d'un anion d'un acide sulfonique, tel que l'acide para-toluènesulfonique, ou à base d'un anion d'un acide carboxylique, tel que l'acide trifluoroacétique, en tant que composant b).

6. Procédé tel que revendiqué dans une ou plus d'une des revendications 1 à 5, caractérisé en ce que l'on utilise une composition de catalyseur dans laquelle le composant b) est présent en une quantité de 1,0 à 100 équivalents par atome-gramme de palladium.

7. Procédé tel que revendiqué dans une ou plus d'une des revendications 1 à 6, caractérisé en ce que l'on utilise une composition de catalyseur qui comporte une 2,2'-bipyridine qui peut être substituée ou non ou bien une 1,10-phénanthroline qui peut être substituée ou non, en tant que composant c).

8. Procédé tel que revendiqué dans une ou plus d'une des revendications 1 à 7, caractérisé en ce que l'on utilise une composition de catalyseur qui renferme une 1,4-quinone, telle que la 1,4-benzoquinone, en tant que composant d).

9. Procédé tel que revendiqué dans une ou plus d'une des revendications 1 à 8, caractérisé en ce que le rapport molaire des composés à insaturation oléfinique par rapport au monoxyde de carbone est de 5:1 à 1:2.
